# EUROPEAN PATENT SPECIFICATION

(11) **EP 2 529 913 B1**
(45) Date of publication and mention of the grant of the patent: **18.05.2016**
(21) Application number: 11736882.9
(22) Date of filing: 18.01.2011
(51) Int. Cl.: B29C 45/14, H01Q 1/40, H01Q 1/24

(54) **INJECTION-MOLDED AND SIMULTANEOUSLY DECORATED ARTICLE WITH ANTENNA AND PRODUCTION METHOD THEREOF, AND POWER FEEDING STRUCTURE OF HOUSING WITH ANTENNA**
SPRITZGEGOSSENER UND GLEICHZEITIG DEKORIERTER ARTIKEL MIT EINER ANTENNE UND HERSTELLUNGSVERFAHREN DAFÜR SOWIE STROMZUFUHRSTRUKTUR AUS EINEM GEHÄUSE MIT EINER ANTENNE
ARTICLE MOULÉ PAR INJECTION ET SIMULTANÉMENT DÉCORÉ AVEC ANTENNE ET SON PROCÉDÉ DE PRODUCTION, ET STRUCTURE D'ALIMENTATION ÉLECTRIQUE D'UN BOÎTIER AVEC ANTENNE

(30) Priority: 26.01.2010 JP 2010014367
(43) Date of publication of application: 05.12.2012
(73) Proprietor: Nissha Printing Co., Ltd., Kyoto-shi, Kyoto 604-8551 (JP)
(72) Inventor: SUZUKI, Takahiro, Kyoto-shi Kyoto 604-8551 (JP); OKUMURA, Shuzo, Kyoto-shi Kyoto 604-8551 (JP); MINAMI, Takafumi, Kyoto-shi Kyoto 604-8551 (JP)
(74) Representative: Hoffmann Eitle
(86) International application number: PCT/JP2011/050718
(87) International publication number: WO 2011/093167

(56) References cited:
- WO-A1-2007/094494
- WO-A1-2007/094494
- JP-A- H10 193 852
- JP-A- H10 247 819
- JP-A- 2002 022 937
- JP-A- 2008 221 665
- US-A1- 2006 273 180
- ARANEO R ET AL: "FE Analysis of a Low-Frequency Microstrip Antenna", IEEE TRANSACTIONS ON MAGNETICS, IEEE SERVICE CENTER, NEW YORK, NY, US, vol. 38, no. 2, 1 March 2002 (2002-03-01), XP011074907, ISSN: 0018-9464

## Description

### TECHNICAL FIELD

The present invention relates to an injection-molded and in-mold decorated article provided with an antenna and a method for producing the same and, more particularly though not exclusively to an injection-molded and in-mold decorated article with an antenna provided for serving as a communication function in a small mobile device such as a mobile telephone, PDA (Personal Digital Assistance), mobile music player, or notebook personal computer (notebook PC), a method for producing the same, and a structure to supply power to an antenna.

### BACKGROUND ART

An antenna is needed to give a wireless communication function to a small mobile device such as a mobile telephone, PDA, mobile music player, or a notebook PC. In addition, a casing of such a small mobile device is formed by injection molding with a material such as a resin, and an outer surface of the casing is decorated with a decorative film in this injection molding.

In this manner, when injection molding simultaneous decoration is performed with the decorative film and a planar antenna, an injection-molded and in-mold decorated article with the antenna in which the antenna and a design are integrally formed is produced (refer to Patent Document 1, for example).

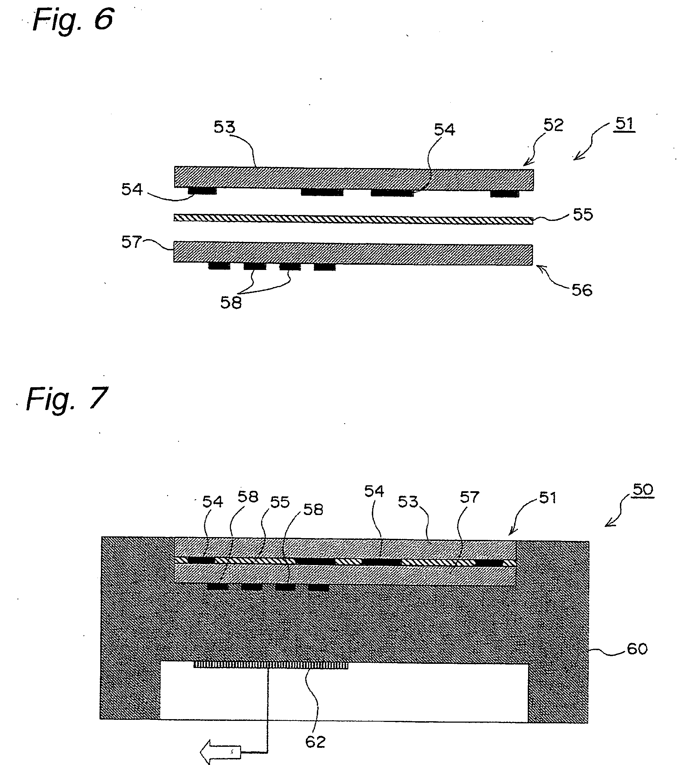

A description will be given of a structure of the conventional injection-molded and in-mold decorated article with an antenna as described above (that is, a casing with an antenna) with reference to schematic views in Figs. 6 and 7.

Fig. 6 is a schematic view showing a decorative film 52 and a planar antenna 56 used in a casing 50 with an antenna. As shown in Fig. 6, the decorative film 52 is provided with a decorative film substrate 53 formed of a transparent resin material, and a decorative pattern 54 printed on a lower surface of the decorative film substrate 53 in the figure. The planar antenna 56 is provided with an antenna film substrate 57, and an antenna pattern 58 arranged on a lower surface of the antenna film substrate 57 in the figure and formed of a conductive material such copper. In addition, the decorative film 52 and the planar antenna 56 are bonded to each other through a bonding layer 55, and formed as an integral laminated sheet 51.

The laminated sheet 51 having the above structure is arranged on an inner surface of a mold and clamped, and a molding resin is inserted into the mold, whereby the laminated sheet 51 and the molding resin are integrated, and the casing 50 with the antenna is produced.

As shown in Fig. 7, according to the casing 50 with the antenna, the laminated sheet 51 including the antenna pattern 58, the antenna film substrate 57, the bonding layer 55, the decorative patterns 54, and the decorative film substrate 53 laminated in this order is arranged on an outer surface, and this laminated sheet 51 is integrated with a molded article 60. Note that, this production method is called an IMD (molding simultaneous decoration transcription system) or an IML (molding simultaneous decoration insert system).

In addition, a power-feeding unit 62 is provided in the thus formed casing 50 with the antenna so as to be opposed to the antenna patterns 58 with the molded article 60 interposed therebetween, and power is supplied from the power-feeding unit 62 to the planar antenna 56 in a non-contact manner.

### PATENT DOCUMENTS

Reference is made to WO2007/094494.

Reference is also made to the composite layered article according to JP H10 247819 A and JP H10 193852 A, which includes an antenna in one layer and an adjacent thickness absorbing layer.

The use of a ferroelectric substrate in a microstrip antenna configuration is known from ARANEO R ET AL: "FE Analysis of a Low-Frequency Microstrip Antenna", IEEE TRANSACTIONS ON MAGNETICS, IEEE SERVICE CENTER, NEW YORK, NY, US, vol. 38, no. 2, 1 March 2002.

### SUMMARY OF THE INVENTION

### Technical Problem

However, according to the casing 50 with the antenna having the above structure, concavo-convex shapes of the antenna pattern 58 formed of a metal material that is harder than a resin material seem to protrude from the surface of the decorative film 52 in some cases, which cause the problem that a design of the casing 50 is damaged. For example, in a case where the antenna pattern 58 having a thickness of 20 [micro]m is used, concavo-convex shapes of about 3 to 4 [micro]m may be generated on the surface of the decorative film 52, and the antenna pattern 58 looks like protruding more than the actual dimension of the concavo-convex shapes in some cases.

In addition, there is a problem that the antenna pattern 58 may be damaged due to heat and pressure at the time of molding.

Furthermore, as for the small mobile device, in tandem with miniaturization of the casing 50, the antenna patterns 58 of the planar antenna 56 are required to be miniaturized.

Embodiments of the present invention solve the above problems, and provide an injection-molded and in-mold decorated article with an antenna whose quality of an appearance design is improved in an injection-molded and in-mold decorated article with an antenna provided for a communication function in a small mobile device, a method for producing the same, and a power-feeding structure of a casing with an antenna.

Embodiments of the present invention improve a function of an antenna including miniaturization of the antenna, in the above injection-molded and in-mold decorated article with the antenna.

According to a first aspect of the present invention, there is provided an injection-molded and in-mold decorated article with an antenna, comprising:
an injection molded article; a decorative film which covers and decorates at least one part of an outer surface of the injection molded article; a planar antenna arranged between the injection molded article and the decorative film; and a thickness absorbing sheet placed between the planar antenna and the injection molded article so as to cover the whole planar antenna to absorb a thickness of the planar antenna, wherein the decorative film, the planar antenna, and the thickness absorbing sheet are integrally formed through injection molding simultaneous decoration, and the thickness absorbing sheet is a ferroelectric sheet.

In the injection-molded and in-mold decorated article with the antenna, a magnetic sheet may be placed between the decorative film and the injection molded article, for example between the decorative film and the planar antenna.

In a preferred arrangement, the planar antenna includes a film substrate, and a conductive layer placed on a surface of the film substrate to form an antenna pattern, and the thickness absorbing sheet absorbs concavo-convex shapes generated due to presence of the conductive layer on the surface of the film substrate.

Embodiments of the present invention, may provide an injection-molded and in-mold decorated article with antenna wherein the planar antenna and the injection molded article are integrated by insert molding.

According to a second aspect of the present invention, there is provided a method for producing an injection-molded and in-mold decorated article with an antenna comprising: placing a laminated sheet for injection molding simultaneous decoration formed by laminating a decorative film, a planar antenna , and a thickness absorbing sheet for absorbing a thickness of the planar antenna, in an open-state mold in such a manner that a side of the decorative film is arranged on an inner surface of the mold; and substantially closing the mold, and injecting a resin into the mold thereby integrating the planar antenna and an injection molding resin with the thickness absorbing sheet interposed therebetween and decorating at least one part of an outer surface of the injection molding resin, wherein a ferroelectric sheet is used as the thickness absorbing sheet in placing the laminated sheet for the injection molding simultaneous decoration in the mold.

In a preferred implementation of the method according to the second aspect of the present invention, the laminated sheet further includes a magnetic sheet placed between the decorative film and the planar antenna is used in placing the laminated sheet for the injection molding simultaneous decoration in the mold.

According to a third aspect of the present invention, there is provided a power-feeding structure of a casing with an antenna, comprising: a casing formed by injection molding; a decorative film which covers and decorates at least one part of an outer surface of the casing; a planar antenna placed between the casing and the decorative film; a ferroelectric sheet placed between the planar antenna and the casing so as to cover the whole planar antenna; and a non-contact power-feeding unit placed on a back surface of the outer surface of the casing so as to be opposed to the planar antenna with the casing and the ferroelectric sheet interposed therebetween, to transfer power and a signal to the planar antenna in a non-contact manner, wherein the ferroelectric sheet is a thickness absorbing sheet which absorbs a thickness of the planar antenna.

A magnetic sheet may be further placed between the decorative film and the planar antenna.

### EFFECTS OF INVENTION

In embodiments of the present invention, the thickness absorbing sheet is arranged between the planar antenna and the injection molded article so as to cover the whole planar antenna absorbs the thickness of the planar antenna (that is, the concavo-convex shapes of the antenna pattern), so that the concavo-convex shapes of the antenna pattern can be prevented from protruding from the surface of the decorative film. Therefore, the quality of the appearance design can be improved in the injection-molded and in-mold decorated article with the antenna.

In addition, since the thickness absorbing sheet is arranged between the planar antenna and the injection molded article, the influence of the heat and pressure transmitted from the injection molding resin to the planar antenna at the time of the injection molding can be reduced due to the thickness absorbing sheet, so that the planar antenna can be prevented from being damaged.

Furthermore, according to the configuration using the ferroelectric sheet as the thickness absorbing sheet, the planar antenna can be miniaturized.

Still furthermore, according to the configuration in which the magnetic sheet is further arranged between the decorative film and the injection molded article, the sensitivity of the antenna can be enhanced while the magnetic sheet is not exposed to the outer surface to retain the quality of the appearance design, so that the function as the antenna can be improved.

### BRIEF DESCRIPTION OF DRAWINGS

These aspects and features of the present invention will become clear from the following description given by way of example and relating to preferred embodiments of the invention when taken in conjunction with the accompanying drawings.
Fig. 1 is a schematic view of a casing with an antenna according to one embodiment of the present invention.
Fig. 2 is a schematic view showing a state in which the casing with the antenna in this embodiment is produced by injection molding simultaneous decoration.
Fig. 3 is a schematic view of an appearance of the casing with the antenna in this embodiment.
Fig. 4 is a schematic view (cross-section) of a laminated sheet used in the casing with the antenna in this embodiment.
Fig. 5 is a schematic view (cross-section) of the casing with the antenna in this embodiment.
Fig. 6 is a schematic view (cross-section) of a laminated sheet used in a conventional casing with an antenna.
Fig. 7 is a schematic view (cross-section) of the conventional casing with the antenna.

### DESCRIPTION OF EMBODIMENTS

In the following description of the present invention, the same part is marked with the same reference in the accompanying drawings. Hereinafter, an embodiment of the present invention will be described in detail with reference to the drawings.

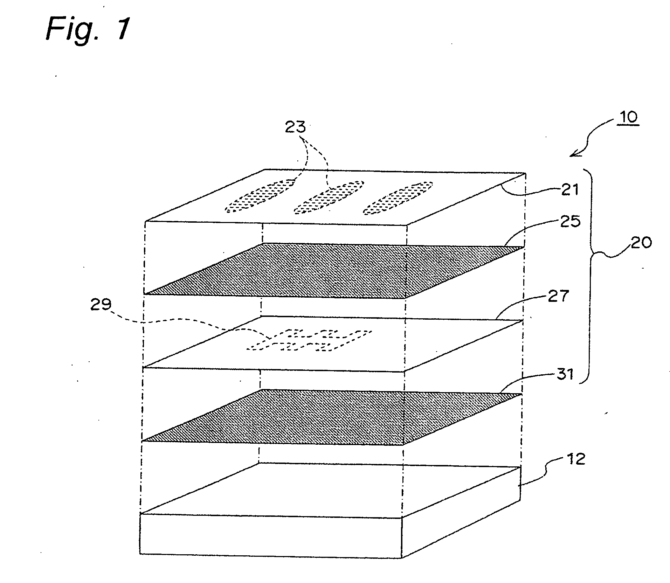

Fig. 1 shows a schematic view showing a configuration of a casing 10 with an antenna as one example of an injection-molded and in-mold decorated article with the antenna according to one embodiment of the present invention. Note that, in Fig. 1, to facilitate understanding of configurations of various sheets or the like, respective components are shown in an exploded manner.

As shown in Fig. 1, the casing 10 with the antenna includes an injection molded article 12 serving as a casing body part, and a laminated sheet 20 arranged on an outer surface of the injection molded article 12, and the injection molded article 12 and the laminated sheet 20 are integrally molded by injection molding simultaneous decoration.

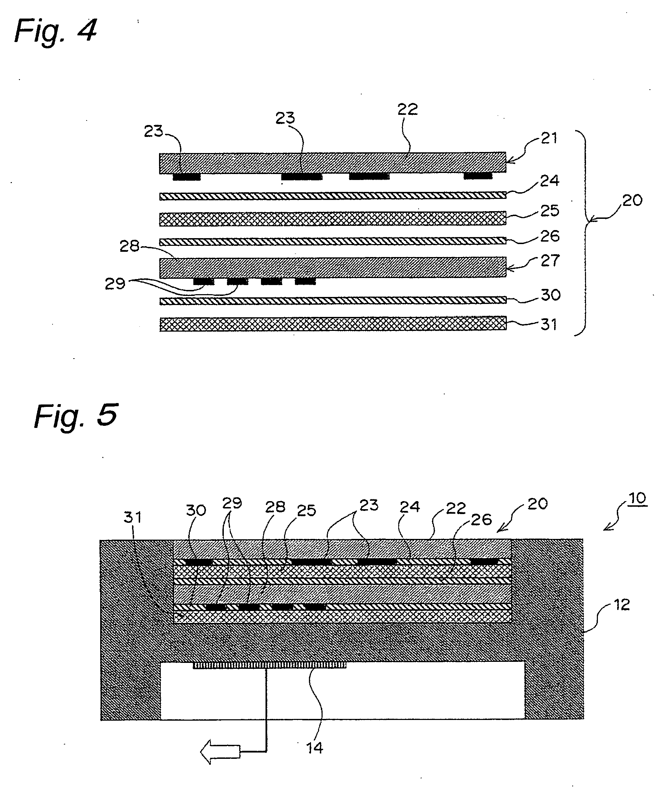

The laminated sheet 20 is formed by laminating a decorative film 21 for decorating the outer surface of the injection molded article 12 as an appearance design, a magnetic sheet 25 formed of a magnetic material into a sheet shape, a sheet-shaped planar antenna 27 for implementing a communication function, and a ferroelectric sheet 31 formed of a ferroelectric material into a sheet shape. In addition, bonding layers 24, 26, and 30 (not shown in Fig. 1 but shown in Fig. 4) are arranged between the decorative film 21, the magnetic sheet 25, the planar antenna 27, and the ferroelectric sheet 31 to bond them.

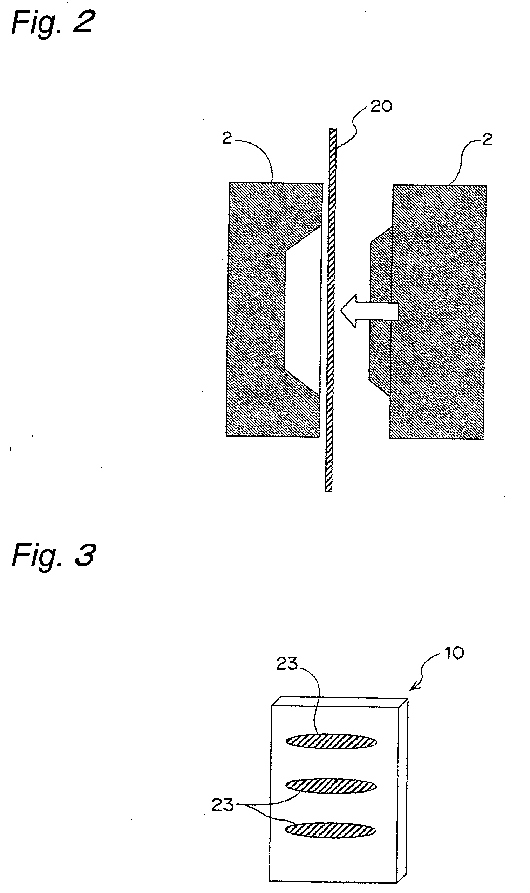

A mold 2 is clamped under the condition that a side of the decorative film 21 of the laminated sheet 20 having the above configuration is arranged on an inner surface of the open-state mold 2 as shown in Fig. 2, and then a molten resin is injected into a space formed in the mold 2, whereby the casing 10 with the antenna having the integrated injection molded article 12 and laminated sheet 20 can be produced as shown in Fig. 3.

Next, with reference to schematic views shown in Figs. 4 and 5, a structure of the casing 10 with the antenna will be further described in detail.

First, the injection molded article 12 has been molded into a previously designed outer shape with a mold. Its material is selected according to a usage purpose of a device (such as a small mobile device) and a molding method. Examples of the material may include a methacryl resin (PMMA), acrylonitrile styrene copolymer resin (AS), acrylonitrile butadiene styrene copolymer resin (ABS), cellulose propionate resin, polycarbonate resin (PC), polystyrene resin (PS), polyester resin, and polyethylene resin.

The decorative film 21 decorates the injection molded article 12 and forms its appearance design. In general, the decorative film 21 is provided by forming a decorative pattern 23 on one surface (lower surface in Fig. 4) of a decorative film substrate 22 made of a transparent resin material.

Examples of a material of the decorative film substrate 22 may include an engineering plastic of polycarbonate series, polyamide series, or polyether ketone series, and a resin film of acrylic series, polyethylene terephthalate series, or polybutylene terephthalate series.

For example, the decorative pattern 23 may be composed of a colored ink layer made of a urethane resin, PC resin, vinyl resin, or polyester resin. In particular, it is preferable to use colored ink containing a urethane series resin and its elastomer as a binder, and a pigment or dye having an appropriate color as a coloring agent.

In addition, the decorative pattern 23 can be formed on the surface of the decorative film substrate 22 by a printing method such as offset printing, gravure printing, or screen printing, or a coating method such as gravure coating, roll coating, or comma coating.

In addition, the decorative film 21 may be arranged so as to cover the whole outer surface of the injection molded article 12, and the whole outer surface of the injection molded article 12 may be decorated with the decorative pattern 23. Alternatively, one part of the outer surface of the injection molded article 12 may not be decorated, and the transparent decorative film substrate 22 may be used as it is as a transparent window part.

Furthermore, the decorative pattern 23 can be formed on an either surface of the decorative film substrate 22, but the decorative pattern 23 is preferably formed on the side of the injection molded article 12, in the decorative film substrate 22 with a view to protecting the decorative patterns 23 from abrasion.

The magnetic sheet 25 is formed of the magnetic material into the sheet shape. The magnetic sheet 25 is high in magnetic permeability, and has a function to increase receiving sensitivity of the planar antenna 27 so that a magnetic field from an external part of the casing 10 with the antenna can be efficiently taken into the planar antenna 27.

In addition, while the magnetic sheet 25 is preferably arranged in a position closer to a transmitter (not shown) provided outside the casing 10 with the antenna, the magnetic sheet 25 is arranged between the decorative film 21 and the injection molded article 12 so as not to damage the appearance design of the decorative film 21.

The planar antenna 27 is provided with an antenna film substrate 28, and an antenna pattern 29 (conductive layer) formed of a conductive material such as copper on one surface (lower surface in Fig. 4) of the antenna film substrate 28.

The material of antenna film substrate 28 is not limited in particular as long as it can function as a supporting member of the antenna pattern 29, so that similar to the decorative film substrate 22, examples of the material thereof may include an engineering plastic of polycarbonate series, polyamide series, or polyether ketone series, and a resin film of acrylic series, polyethylene terephthalate series, or polybutylene terephthalate series.

The conductive material of the antenna pattern 29 is not limited in particular as long as it can function as an antenna. Examples of the conductive material may include metal such as gold, platinum, silver, copper, aluminum, nickel, zinc, or lead. In addition, a polymer having conductivity such as a conductive polymer can be used.

The antenna pattern 29 of the planar antenna 27 is appropriately selected according to a frequency band and usage employed, and may be selected from the various antenna patterns used in the communication such as wireless LAN, Bluetooth, RFID (Radio Frequency Identification), GPS (Global Positioning System), or ETC (Electronic Toll Collection System).

In addition, the antenna pattern 29 can be formed by the screen printing method when the conductive material is a paste material, or it can be formed by an etching method using a printing resist and a photosensitive resist when the conductive material is foil or plate.

The ferroelectric sheet 31 is formed of a ferroelectric material into a sheet shape. In general, the ferroelectric is a material having spontaneous polarization even when an external electric field is not applied, and a direction of the polarization can be changed only by the application of the external electric field. When the ferroelectric sheet 31 is arranged, a planar size of the antenna pattern 29 of the planer antenna 27 can be reduced. In addition, the ferroelectric sheet 31 is preferably arranged in a position closer to the antenna pattern 29 with a view to miniaturizing the antenna pattern 29.

The bonding layers 24, 26, and 30 formed, for example, of an adhesive resin material are arranged between the decorative film 21, the magnetic sheet 25, the planar antenna 27, and the ferroelectric sheet 31, respectively and the sheet-shaped members are bonded to each other, whereby the laminated sheet 20 is formed.

Note that, one example of a thickness dimension of each member forming the laminated sheet 20 is as follows.

| | |
|---|---|
| Decorative film substrate 22: | 125 µm |
| Decorative pattern 23: | 10 µm |
| Bonding layer 24: | 25 to 50 µm |
| Magnetic sheet 25: | 100 µm |
| Bonding layer 26: | 25 to 50 µm |
| Antenna film substrate 28: | 125 µm |
| Antenna pattern 29: | 20 µm |
| Bonding layer 30: | 25 to 50 µm |
| Ferroelectric sheet 31: | 100 µm |

The injection molding simultaneous decoration is performed on the laminated sheet 20 having the above configuration, whereby the casing 10 with the antenna is formed as shown in Fig. 5.

As shown in Fig. 5, the laminated sheet 20 is integrated with the injection molded article 12 in such a manner that the outer surface of the injection molded article 12 is decorated with the decorative pattern 23, and the planar antenna 27 is incorporated therein.

A non-contact power-feeding unit 14 is provided on a surface opposite to the surface on which the laminated sheet 20 is arranged, in the injection molded article 12 to transfer power and a signal to the antenna pattern 29 of the planar antenna 27 in a non-contact manner. When power is supplied from a power supply (not shown) to the non-contact power-feeding unit 14, the power is supplied to the antenna pattern 29, so that the communication function as the antenna can be implemented.

According to the casing 10 with the antenna in this embodiment, the following various effects can be obtained.

First, the laminated sheet 20 has the configuration in which the ferroelectric sheet 31 is arranged between the planar antenna 27 and the injection molded article 12. Therefore, the ferroelectric sheet 31 can deform in a thickness direction to absorb a concavo-convex shape of the antenna pattern 29 of the planar antenna 27. That is, according to the conventional structure shown in Fig. 7, in a case where the antenna film substrate 57 receives pressure from a lower surface side in the figure when the injection molding is performed, the part on which the antenna pattern 58 is formed is pushed by force stronger than that of the part on which it is not formed, which causes the problem that the shape of the antenna pattern 58 protrudes from an upper surface of the decorative film 52 in the figure and the appearance design is damaged. On the contrary, according to this embodiment, the ferroelectric sheet 31 having the sufficiently large thickness compared with the thickness of the antenna pattern 29 is newly arranged, so that the ferroelectric sheet 31 can absorb the thickness (that is, concavo-convex shapes) of the antenna pattern 29. Therefore, while the planar antenna 27 is incorporated, the antenna pattern 29 is prevented from protruding in the appearance design of the decorative film 21, so that the quality of the appearance design can be improved.

In addition, the magnetic sheet 25 is further provided in addition to the ferroelectric sheet 31 in the laminated sheet 20, so that the effect of absorbing the thickness of the antenna pattern 29 can be further enhanced. Thus, when a focus is placed on the function of absorbing the thickness of the antenna pattern 29, the ferroelectric sheet 31 and the magnetic sheet 25 can be regarded as thickness absorbing sheets. In addition, in order to absorb the thickness more efficiently, the thickness absorbing sheet is preferably formed of a material more flexible than the conductive material of the antenna pattern 29.

In addition, since the ferroelectric sheet 31 is arranged between the planar antenna 27 and the injection molded article 12, heat and pressure applied to the planar antenna 27 at the time of the injection molding can be reduced by the ferroelectric sheet 31. Therefore, the antenna pattern 29 can be prevented from being damaged by the heat and pressure applied to the planar antenna 27 at the time of the injection molding.

Furthermore, since the ferroelectric sheet 31 is provided in the laminated sheet 20, the planar size of the antenna pattern 29 can be reduced using the characteristics as the ferroelectric. In particular, when the antenna pattern 29 is miniaturized, the casing 10 with the antenna can be more likely to be applied to a small mobile device.

In addition, since the magnetic sheet 25 is provided in the laminated sheet 20, receiving sensitivity of the planar antenna 27 can be improved. In particular, since the magnetic sheet 25 is arranged between the decorative film 21 and the planar antenna 27, the receiving sensitivity of the planar antenna 27 can be efficiently enhanced without damaging the appearance design of the decorative film 21. In addition, when the magnetic sheet 25 is arranged between the other members, the magnetic sheet 25 can be prevented from being peeled due to aging.

In addition, since the non-contact power-feeding unit 14 is provided on the surface opposite to the surface on which the laminated sheet 20 is arranged, in the injection molded article 12, the power and signal can be surely transferred to the antenna pattern 29 of the planar antenna 27 in the non-contact manner. In addition, since the ferroelectric sheet 31 is arranged between the planar antenna 27 and the non-contact power-feeding unit 14, the non-contact feeding can be effectively performed on the miniaturized planar antenna 27.

Furthermore, other than the magnetic sheet and the ferroelectric sheet, examples of the thickness absorbing sheet may include an engineering plastic of polycarbonate series, polyamide series, or polyether ketone series, and a resin film of acrylic series, polyethylene terephthalate series, or polybutylene terephthalate series.

In addition, when the embodiments are appropriately combined among the above various embodiments, the respective effects can be provided.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An injection-molded and in-mold decorated article with an antenna, comprising:
an injection molded article (12);
a decorative film (21) which covers and decorates at least one part of an outer surface of the injection molded article;
a planar antenna (27) arranged between the injection molded article and the decorative film; and
a thickness absorbing sheet (31) placed between the planar antenna and the injection molded article so as to cover the whole planar antenna to absorb a thickness of the planar antenna, wherein
the decorative film, the planar antenna, and the thickness absorbing sheet are integrally formed through injection molding simultaneous decoration, and the thickness absorbing sheet (31) is a ferroelectric sheet.

2. The injection-molded and in-mold decorated article with the antenna according to claim 1, wherein
a magnetic sheet (25) is placed between the decorative film and the injection molded article.

3. The injection-molded and in-mold decorated article with the antenna according to claim 2, wherein
the magnetic sheet (25) is placed between the decorative film (21) and the planar antenna (17).

4. The injection-molded and in-mold decorated article with the antenna according to claim 1, wherein
the planar antenna (27) includes a film substrate (28), and a conductive layer (29) placed on a surface of the film substrate to form an antenna pattern, and
the thickness absorbing sheet absorbs concavo-convex shapes generated due to presence of the conductive layer on the surface of the film substrate.

5. The injection-molded and in-mold decorated article with the antenna according to any one of claims 1, 3 and 4, wherein
the planar antenna and the injection molded article are integrated by insert molding.

6. A method for producing an injection-molded and in-mold decorated article with an antenna comprising:
placing a laminated sheet (20) for injection molding simultaneous decoration formed by laminating a decorative film (21), a planar antenna (27), and a thickness absorbing sheet (31) for absorbing a thickness of the planar antenna, in an open-state mold (2) in such a manner that a side of the decorative film is arranged on an inner surface of the mold; and
substantially closing the mold, and injecting a resin into the mold thereby integrating the planar antenna and an injection molding resin with the thickness absorbing sheet interposed therebetween and decorating at least one part of an outer surface of the injection molding resin, wherein
a ferroelectric sheet is used as the thickness absorbing sheet (31) in placing the laminated sheet for the injection molding simultaneous decoration in the mold.

7. The method for producing the injection-molded and in-mold decorated article with the antenna according to claim 6, wherein
the laminated sheet further including a magnetic sheet (25) placed between the decorative film and the planar antenna is used in placing the laminated sheet for the injection molding simultaneous decoration in the mold.

8. A power-feeding structure of a casing with an antenna, comprising:
a casing (10) formed by injection molding;
a decorative film (21) which covers and decorates at least one part of an outer surface of the casing;
a planar antenna (27) placed between the casing and the decorative film;
a ferroelectric sheet (31) placed between the planar antenna and the casing so as to cover the whole planar antenna; and
a non-contact power-feeding unit (14) placed on a back surface of the outer surface of the casing (10) so as to be opposed to the planar antenna with the casing and the ferroelectric sheet interposed therebetween, to transfer power and a signal to the planar antenna in a non-contact manner, wherein the ferroelectric sheet is a thickness absorbing sheet which absorbs a thickness of the plantar antenna.

9. The power-reeaing structure ot the casing with the antenna according to claim 8, wherein
a magnetic sheet (25) is further placed between the decorative film and the planar antenna.

## Patentansprüche

1. Spritzgegossener und im Formwerkzeug verzierter Artikel mit einer Antenne, umfassend:
einen spritzgegossenen Artikel (12),
eine Dekorfolie (21), die zumindest einen Teil einer Außenfläche des spritzgegossenen Artikels abdeckt und verziert,
eine Planarantenne (27), die zwischen dem spritzgegossenen Artikel und der Dekorfolie angeordnet ist, und
eine stärkeabsorbierende Lage (31), die zwischen der Planarantenne und dem spritzgegossenen Artikel angeordnet ist, um die gesamte Planarantenne abzudecken, damit eine Stärke der Planarantenne absorbiert wird, wobei
die Dekorfolie, die Planarantenne und die stärkeabsorbierende Lage durch Spritzgießen integral ausgebildet und gleichzeitig mit einer Verzierung versehen sind, und die stärkeabsorbierende Lage (31) eine ferroelektrische Lage ist.

2. Spritzgegossener und im Formwerkzeug verzierter Artikel mit der Antenne nach Anspruch 1, wobei
eine magnetische Lage (25) zwischen der Dekorfolie und dem spritzgegossenen Artikel angeordnet ist.

3. Spritzgegossener und im Formwerkzeug verzierter Artikel mit der Antenne nach Anspruch 2, wobei
die magnetische Lage (25) zwischen der Dekorfolie (21) und der Planarantenne (27) angeordnet ist.

4. Spritzgegossener und im Formwerkzeug verzierter Artikel mit der Antenne nach Anspruch 1, wobei
die Planarantenne (27) ein Filmsubstrat (28) und eine leitende Schicht (29), die an einer Oberfläche des Filmsubstrats angeordnet ist, um ein Antennenmuster auszubilden, umfasst, und
die stärkeabsorbierende Lage konkav-konvexe Formen absorbiert, die aufgrund der Präsenz der leitfähigen Schicht an der Oberfläche des Filmsubstrats entstehen.

5. Spritzgegossener und im Formwerkzeug verzierter Artikel mit der Antenne, nach einem der Ansprüche 1, 3 und 4, wobei
die Planarantenne und der spritzgegossene Artikel durch Umspritzen integriert sind.

6. Verfahren zur Herstellung eines spritzgegossenen und im Formwerkzeug verzierten Artikels mit einer Antenne, umfassend:
Plazieren einer laminierten Lage (20), zum gleichzeitigen Spritzgießen und Verzieren, die durch Laminieren einer Dekorfolie (21) ausgebildet ist, einer Planarantenne (27) und einer stärkeabsorbierenden Lage (31), für das Absorbieren einer Stärke der Planarantenne, derart in eine geöffnete Form (2), dass eine Seite der Dekorfolie auf einer Innenfläche der Form angeordnet ist, und
die Form im Wesentlichen abgeschlossen wird, und Einspritzen eines Harzes in die Form, wodurch die Planarantenne und ein Spritzgussharz, mit der stärkeabsorbierenden Lage dazwischen angeordnet, integriert werden und zumindest ein Teil einer Außenfläche des Spritzgussharzes verziert, wobei
beim Plazieren der laminierten Lage zum gleichzeitigen Spritzgießen und Verzieren in der Form, eine ferroelektrische Lage als die stärkeabsorbierende Lage (31) verwendet wird.

7. Verfahren zur Herstellung des spritzgegossenen und im Formwerkzeug verzierten Artikels mit der Antenne nach Anspruch 6, wobei
die laminierte Lage ferner eine magnetische Lage (25) enthält, die zwischen der Dekorfolie und der Planarantenne angeordnet ist, und die beim Plazieren der laminierten Lage zum gleichzeitigen Spritzgießen und Verzieren in der Form
verwendet wird.

8. Stromzuführungsaufbau eines Gehäuses mit einer Antenne, umfassend:
ein Gehäuse (10), das durch Spritzgießen ausgebildet ist,
eine Dekorfolie (21), die zumindest einen Teil einer Außenfläche des Gehäuses abdeckt und verziert,
eine Planarantenne (27), die zwischen dem Gehäuse und der Dekorfolie angeordnet ist,
eine ferroelektrische Lage (31), die zwischen der Planarantenne und dem Gehäuse angeordnet ist, um die gesamte Planarantenne abzudecken, und
eine berührungslose Stromzuführungseinheit (14), die auf einer Rückfläche der Außenfläche des Gehäuses (10) angeordnet ist, um der Planarantenne gegenüberzuliegen, wobei das Gehäuse und die ferroelektrische Lage dazwischen angeordnet sind, um auf berührungslose Art und Weise Strom und ein Signal zu der Planarantenne zu übertragen, wobei die ferroelektrische Lage eine stärkeabsorbierende Lage ist, die eine Stärke der Planarantenne absorbiert.

9. Stromzuführungsaufbau des Gehäuses mit der Antenne nach Anspruch 8, wobei
ferner eine Magnetlage (25) zwischen der Dekorfolie und der Planarantenne angeordnet ist.

## Revendications

1. Article pourvu d'une antenne moulé par injection et décoré en moule, comportant :
un article moulé par injection (12),
un film décoratif (21) qui recouvre et décore au moins une partie d'une surface extérieure de l'article moulé par injection,
une antenne plane (27) agencée entre l'article moulé par injection et le film décoratif, et
une feuille d'absorption d'épaisseur (31) placée entre l'antenne plane et l'article moulé par injection de manière à recouvrir la totalité de l'antenne plane afin d'absorber une épaisseur de l'antenne plane, dans lequel
le film décoratif, l'antenne plane et la feuille d'absorption d'épaisseur sont intégralement formés par une décoration simultanée à un moulage par injection, et la feuille d'absorption d'épaisseur (31) est une feuille ferroélectrique.

2. Article moulé par injection et décoré en moule pourvu de l'antenne selon la revendication 1, dans lequel
une feuille magnétique (25) est placée entre le film décoratif et l'article moulé par injection.

3. Article moulé par injection et décoré en moule pourvu de l'antenne selon la revendication 2, dans lequel
la feuille magnétique (25) est placée entre le film décoratif (21) et l'antenne plane (17).

4. Article moulé par injection et décoré en moule pourvu de l'antenne selon la revendication 1, dans lequel
l'antenne plane (27) inclut un substrat de film (28) et une couche conductrice (29) placée sur une surface du substrat de film pour former un motif d'antenne, et
la feuille d'absorption d'épaisseur absorbe des formes concavo-convexes générées en raison de la présence de la couche conductrice sur la surface du substrat de film.

5. Article moulé par injection et décoré en moule pourvu de l'antenne selon l'une quelconque des revendications 1, 3 et 4, dans lequel
l'antenne plane et l'article moulé par injection sont intégrés par moulage d'insert.

6. Procédé pour produire un article pourvu d'une antenne moulé par injection et décoré en moule comportant :
placer une feuille laminée (20) pour une décoration simultanée à un moulage par injection formée par laminage d'un film décoratif (21), une antenne plane (27) et une feuille d'absorption d'épaisseur (31) pour absorber une épaisseur de l'antenne plane, dans un moule à l'état ouvert (2) de telle manière qu'un côté du film décoratif soit disposé sur une surface intérieure du moule, et
fermer sensiblement le moule, et injecter une résine dans le moule en intégrant ainsi l'antenne plane et une résine de moulage par injection avec la feuille d'absorption d'épaisseur interposée entre celles-ci, et décorer au moins une partie d'une surface extérieure de la résine de moulage par injection, dans lequel
une feuille ferroélectrique est utilisée comme feuille d'absorption d'épaisseur (31) en plaçant la feuille laminée pour la décoration simultanée au moulage par injection dans le moule.

7. Procédé pour produire l'article moulé par injection et décoré en moule pourvu de l'antenne selon la revendication 6, dans lequel
la feuille laminée incluant en outre une feuille magnétique (25) placée entre le film décoratif et l'antenne plane est utilisée en plaçant la feuille laminée en vue de la décoration simultanée au moulage par injection dans le moule.

8. Structure d'alimentation en puissance d'un boîtier muni d'une antenne, comportant :
un boîtier (10) formé par un moulage par injection,
un film décoratif (21) qui recouvre et décore au moins une partie d'une surface extérieure du boîtier,
une antenne plane (27) placée entre le boîtier et le film décoratif,
une feuille ferroélectrique (31) placée entre l'antenne plane et le boîtier de manière à recouvrir l'ensemble de l'antenne plane, et
une unité d'alimentation en courant sans contact (14) placée sur une surface arrière de la surface extérieure du boîtier (10) de manière à être opposée à l'antenne plane avec le boîtier et la feuille ferroélectrique interposés entre celles-ci, à transférer du courant et un signal à l'antenne plane d'une manière sans contact, dans lequel la feuille ferroélectrique est une feuille d'absorption épaisseur qui absorbe une épaisseur de l'antenne plane.

9. Structure d'alimentation en courant du boîtier muni de l'antenne selon la revendication 8, dans laquelle
une feuille magnétique (25) est en outre placée entre le film décoratif et l'antenne plane.
